(19) **Europäisches Patentamt European Patent Office Office européen des brevets**

(11) **EP 2 131 471 B1**

(12) **FASCICULE DE BREVET EUROPEEN**

(45) Date de publication et mention de la délivrance du brevet:
**31.01.2018 Bulletin 2018/05**

(51) Int Cl.:
***H02J 7/00*** *(2006.01)*  ***H01M 10/42*** *(2006.01)*

(21) Numéro de dépôt: **08157719.9**

(22) Date de dépôt: **06.06.2008**

(54) **Equilibrage des tensions électriques aux bornes de cellules électriques montées en série**

Elektrischer Spannungsausgleich an den Klemmen von in Serie geschalteten elektrischen Zellen

Balancing of electrical voltages on the terminals of serially mounted electrical cells

(84) Etats contractants désignés:
**AT BE BG CH CY CZ DE DK EE ES FI FR GB GR HR HU IE IS IT LI LT LU LV MC MT NL NO PL PT RO SE SI SK TR**

(43) Date de publication de la demande:
**09.12.2009 Bulletin 2009/50**

(73) Titulaire: **THALES**
**92400 Courbevoie (FR)**

(72) Inventeurs:
• **Michel, Raymond**
**94117 Arcueil Cedex (FR)**

• **Baudet, Etienne**
**94117 Arcueil Cedex (FR)**
• **Saussez, Yves**
**94117 Arcueil Cedex (FR)**

(74) Mandataire: **Esselin, Sophie et al**
**Marks & Clerk France**
**Conseils en Propriété Industrielle**
**Immeuble Visium**
**22 avenue Aristide Briand**
**94117 Arcueil Cedex (FR)**

(56) Documents cités:
**EP-A- 0 760 548**  **US-A- 6 081 095**
**US-A1- 2005 077 875**  **US-A1- 2006 103 349**

**Description**

L'invention porte sur un dispositif et un procédé d'équilibrage des tensions électriques aux bornes des cellules électriques d'un groupe de trois cellules électriques disposées en série. L'invention porte également sur un système autonome d'équilibrage des tensions électriques des cellules électriques d'une batterie électrique.

Une batterie composée de cellules électriques reliées en série subit des cycles alternés de charge et de décharge. Il est important de pouvoir gérer la charge de la batterie, notamment lorsque ces dernières évoluent dans un milieu tel le milieu spatial, inaccessible pour un changement ou une réparation avec intervention humaine. Une cellule électrique peut, par exemple être une cellule électrochimique ou un accumulateur.

Un accumulateur électrochimique, qui permet de stocker de l'énergie électrique pour la restituer ultérieurement, fonctionne au moyen de réaction électrochimique à leurs électrodes, qui assurent une conversion d'énergie chimique en énergie électrique. Par exemple, les batteries à base de Lithium présentent un fort potentiel électrochimique, mais doivent être protégées contre les sous-tensions et les surtensions électriques durant les phases de charge et de décharge.

Les cellules électriques composant la batterie, sont censées être identiques et de tension électriques aux bornes égales à tout moment. Toutefois, au cours du temps, i.e suite aux charges et décharges successives de la batterie, les écarts de fonctionnement entre les différentes cellules ont généralement tendance à s'accentuer, ce qui peut provoquer une importante perte de capacité de stockage d'énergie et un risque de dégradation, et limiter leur durée de fonctionnement en cas de sur-tension ou de sous-tension de certaines cellules de la batterie électrique.

Les tensions électriques aux bornes des cellules d'une batterie de cellules électriques est donc d'une importance capitale, et doit être gérée de manière à éviter ou limiter au maximum les risques de dégradation trop rapide de la batterie. Il est notamment important de réguler au mieux l'équilibrage des tensions aux bornes des différentes cellules.

A ces fins, il est connu un procédé d'équilibrage des tensions au bornes des cellules par résistance. Ce procédé consiste à placer, en parallèle, sur chaque cellule électrique de la batterie, une résistance. Une telle résistance dévie, en permanence, un courant électrique qui permet, à long terme, d'équilibrer les tensions électriques aux bornes des cellules électriques de la batterie. La valeur de la résistance dépend de la vitesse de convergence souhaitée de l'équilibrage des tensions électriques, de caractéristiques techniques des cellules, dont la dispersion de la capacité des cellules, le courant de fuite, et de la décharge résiduelle occasionnée par les résistances.

Ce procédé ne permet d'assurer un équilibrage de cellules pouvant délivrer de faibles tensions et durant une période relativement courte.

Il est également connu des procédés d'équilibrage des tensions électriques aux bornes des cellules électriques d'une batterie, nommés BEU et LMU, basés sur un principe commun. Ces procédés sont, par exemple décrits dans (compléter par deux références si possible brevet). Le principe commun consiste à réaliser une mesure très précise de la tension électrique aux bornes de chaque cellule, de convertir cette grandeur analogique en grandeur numérique, de transmettre ces valeurs à un calculateur, qui, après analyse de l'ensemble des tensions électriques aux bornes des cellules actionnera un circuit de dérivation ou bypass de type dissipatif (résistance) sur les cellules dont la tension électrique est trop importante. L'algorithme mis en oeuvre est complexe car le bypass ne dévie qu'une partie du courant de charge des cellules électriques afin de limiter la dissipation dans le bypass. Dès lors, l'algorithme doit anticiper la décharge afin d'avoir l'ensemble de cellules à la tension électrique maximale autorisée lorsque la charge de la batterie est terminée. De plus toute une série de protections doivent être implantées pour couvrir les cas de panne du système, telles une redondance des mesures, des mesures intermédiaires à corréler avec les mesures des tensions électriques aux bornes des cellules.

Ces procédés sont complexes et nécessitent des ressources de calcul importantes.

La présente invention vise à résoudre les problèmes précédemment cités, à coût réduit.

Il est proposé, selon un aspect de l'invention, un dispositif d'équilibrage des tensions électriques aux bornes des cellules électriques d'un groupe de trois cellules électriques disposées en série. Le système comprend des premiers moyens de délivrance d'une première tension électrique égale à la demie-somme des tensions électriques aux bornes desdites dudit groupe de trois celllules, et des deuxièmes moyens de délivrance d'une deuxième tension électrique égale à la somme de la tension électrique aux bornes d'une cellule disposée à une extrémité dudit groupe de trois cellules et de la moitié de la tension électrique aux bornes de la cellule disposée au milieu dudit groupe de trois cellules.

Un tel dispositif permet, de manière autonome, d'équilibrer les tensions électriques aux bornes d'un ensemble de trois cellules électriques montées en série comme défini dans la revendication 1. Ainsi quand la tension d'une des deux cellules extrêmes est trop élevée, elle est automatiquement diminuée.

Par exemple, lesdits premiers et deuxièmes moyens commandés de dérivation comprennent respectivement un transistor, et éventuellement une résistance.

Une telle réalisation est aisée et de coût réduit.

Dans un mode de réalisation, le dispositif comprend des moyens de commande desdits premiers moyens de dérivation et desdits deuxièmes moyens de dérivation adaptés pour activer/désactiver lesdits premiers et deuxièmes moyens de dérivation.

Par exemple, lesdits moyens de commande comprennent une résistance de polarisation.

Cette réalisation est simple et de faible coût.

Selon un mode de réalisation le dispositif comprend des premiers et deuxièmes moyens d'inhibition adaptés pour empêcher respectivement l'activation des premiers et deuxièmes moyens de dérivation lorsque la cellule opposée à la cellule d'extrémité dudit groupe de trois cellules liée au moyen de dérivation est inférieure à une tension de seuil.

Ainsi, en cas de problème de sous-tension d'une cellule du groupe de cellules, le problème n'est pas propagé aux autres cellules.

Par exemple, lesdits premiers et deuxièmes moyens d'inhibition comprennent respectivement un transistor, une diode et une résistance.

Par exemple, lesdits premiers moyens de délivrance de la première tension électrique comprennent deux résistances égales disposées en série sur une dérivation entre les extrémités dudit groupe de trois cellules, et une sortie délivrant ladite première tension électrique, disposé entre lesdites deux résistances.

Une telle réalisation est de coût réduit.

Selon un mode de réalisation, lesdits deuxièmes moyens de délivrance de la deuxième tension électrique comprennent deux résistances égales disposées en série sur une dérivation entre les bornes de la cellule disposée au milieu dudit groupe de trois cellules, et une sortie délivrant ladite deuxième tension électrique, disposé entre lesdites deux résistances.

Une telle réalisation a un faible coût.

Dans un mode de réalisation, ledit comparateur comprend un comparateur additionnel en redondance, et/ou lesdits premiers moyens de délivrance de ladite première tension électrique comprennent des premiers moyens de délivrance en redondance de ladite première tension électrique, et/ou lesdits deuxièmes moyens de délivrance de ladite deuxième tension électrique comprennent des deuxièmes moyens de délivrance en redondance de ladite deuxième tension électrique, et/ou lesdits moyens de commande comprennent des moyens de commande en redondance.

Aussi, en cas de panne du comparateur ou d'un des moyens de délivrance de la première ou deuxième tension électrique, le dispositif se bloque automatiquement et ne décharge pas une cellule de manière intempestive.

Selon un autre aspect de l'invention, il est également proposé un système autonome d'équilibrage des tensions électriques des cellules électriques d'une batterie électrique comprenant des cellules électriques disposées en série, comprenant au moins un groupe de trois cellules disposées en série muni d'un dispositif d'équilibrage tel que décrit précédemment.

Un tel système permet d'équilibrer de manière autonome une série de trois cellules d'une batterie.

Dans un mode de réalisation, tout groupe de trois cellules électriques consécutives du système est muni d'un dispositif d'équilibrage tel que précédemment décrit.

Un tel entrelacement permet d'avoir un système autonome d'équilibrage des cellules de la batterie électrique. En outre, un tel système permet d'éviter une propagation de panne simples, voire, dans certains modes de réalisation, de pannes multiples.

Dans un mode de réalisation, deux cellules consécutives disposées en extrémité de ladite série de cellules de la batterie du système sont munies d'un dispositif d'équilibrage tel que décrit précédemment, ledit dispositif d'équilibrage étant adapté pour fonctionner avec deux cellules consécutives en considérant une cellule virtuelle dont la tension électrique aux bornes est nulle.

Selon un autre aspect de l'invention, il est également proposé un procédé d'équilibrage des tensions électriques aux bornes des cellules électriques d'un groupe de trois cellules électriques disposées en série. On délivre une première tension électrique égale à la demie-somme des tensions électriques aux bornes dudit groupe de trois celllules, et on délivre une deuxième tension électrique égale à la somme de la tension électrique aux bornes d'une cellule disposée à une extrémité dudit groupe de trois cellules et de la moitié de la tension électrique aux bornes de la cellule disposée au milieu dudit groupe de trois cellules.

Selon un autre aspect de l'invention, il est également proposé une utilisation d'un système tel que décrit ci-dessus, à bord d'un système spatial.

L'utilisation d'un tel système, autonome, est particulièrement adapté au milieu spatial.

L'invention sera mieux comprise à l'étude de quelques modes de réalisation décrits à titre d'exemples nullement limitatifs et illustrés par les dessins annexés sur lesquels :

- la figure 1 est un schéma synoptique d'un dispositif d'équilibrage selon un aspect de l'invention ;
- la figure 2 est un schéma synoptique d'un dispositif d'équilibrage selon un autre aspect de l'invention ;
- la figure 3 est un schéma synoptique d'un dispositif d'équilibrage selon un autre aspect de l'invention ;
- la figure 4 est un schéma synoptique d'un système d'équilibrage comprenant un entrelacement de dispositifs selon un aspect de l'invention ;
- la figure 5 illustre un cas de gestion de panne d'un système selon la figure 4 ;
- les figures 6, 7 et 8 illustrent un cas de gestion de panne double d'un système selon un aspect de l'invention ; et
- la figure 9 est un schéma synoptique d'un mode de réalisation d'un procédé selon la figure 3 ;

Sur les différentes figures, les éléments ayant des références identiques sont identiques.

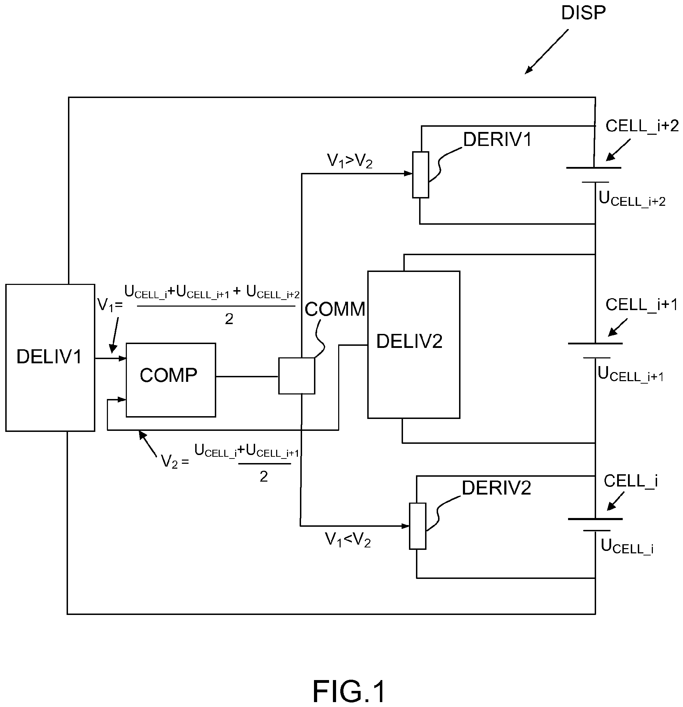

Tel qu'illustré sur la figure 1, un dispositif d'équilibrage DISP d'un groupe de trois cellules électriques comprenant une première cellule électrique CELL_$_i$ une deuxième cellule électrique CELL$_{\_i+1}$ et une troisième cellule électrique CELL$_{\_i+2}$ disposées en série, comprend un premier module de délivrance DELIV1 d'une première tension électrique V$_1$ égale à la demie-somme des tensions électriques U$_{CELL\_i}$, U$_{CELL\_i+1}$, et U$_{CELL\_i+2}$ aux bornes dudit groupe de trois cellules CELL_i, CELL_i+1, et CELL_i+2. En d'autres termes, on a la relation suivante :

$$V_1 = \frac{U_{cell\_i} + U_{cell\_i+1} + U_{cell\_i+2}}{2}$$

Le dispositif d'équilibrage DISP comprend également un deuxième module de délivrance DELIV2 d'une deuxième tension électrique V$_2$ égale à la somme de la tension électrique U$_{CELL\_i}$ aux bornes d'une cellule CELL$_{\_i}$ disposée à une extrémité dudit groupe de trois cellules CELL$_{\_i}$, CELL$_{\_i+1}$, et CELL$_{\_i+2}$ et de la moitié de la tension électrique U$_{CELL\_i+1}$ aux bornes de la cellule CELL$_{\_i+1}$ disposée au milieu dudit groupe de trois cellules. En d'autres termes on a la relation suivante :

$$V_2 = U_{CELL\_i} + \frac{U_{CELL\_i+1}}{2}$$

Les deux tensions électriques V$_1$ et V$_2$ sont respectivement délivrées par les premier et deuxième modules de délivrance DELIV1 et DELIV2 à un comparateur COMP. Le comparateur COMP compare les valeurs des première et deuxième tensions électriques V$_1$ et V$_2$, et délivre en sortie un signal codant une information représentative du résultat de la comparaison à destination d'un module de commande COMM.

Le module de commande COMM est adapté pour commander deux circuits de dérivation DERIV1 et DERIV2 de courant électrique. Le premier circuit commandé de dérivation DERIV1 de courant électrique est capable, lorsqu'il est activé, de dériver une partie du courant électrique pour diminuer la tension électrique aux bornes de la troisième cellule électrique CELL$_{\_i+2}$. Le deuxième circuit commandé de dérivation DERIV2 de courant électrique est capable, lorsqu'il est activé, de dériver une partie du courant électrique pour diminuer la tension électrique aux bornes de la première cellule électrique CELL$_{\_i}$. Selon l'information reçue du comparateur COMP, le module de commande COMM peut activer ou désactiver les deux circuits de dérivation DERIV1 et DERIV2. Lorsque la première tension V$_1$ est supérieure à la deuxième tension V$_2$, le module de commande COMM active le premier circuit de dérivation DERIV1, et lorsque la deuxième tension V$_2$ est supérieure à la première tension V$_1$, le module de commande COMM active le deuxième circuit de dérivation DERIV2.

Comparer la première tension électrique

$$V_1 = \frac{U_{cell\_i} + U_{cell\_i+1} + U_{cell\_i+2}}{2} \quad \text{et la deuxième}$$

tension électrique $V_2 = U_{CELL\_i} + \frac{U_{CELL\_i+1}}{2}$ revient à comparer $\frac{U_{cell\_i} + U_{cell\_i+1} + U_{cell\_i+2}}{2}$ et

$U_{CELL\_i} + \frac{U_{CELL\_i+1}}{2}$. Aussi, cela revient à comparer U$_{cell\_i}$ + U$_{cell\_i+1}$ + U$_{cell\_i+2}$ et 2 U$_{cell\_i}$ + U$_{cell\_i+1}$, c'est-à-dire à comparer U$_{cell\_i+2}$ et U$_{cell\_i}$

Dans cette comparaison, U$_{CELL\_i+1}$ n'intervient pas.

A titre d'illustration du fonctionnement du dispositif DISP, si la tension électrique U$_{CELL\_i}$ aux bornes de la première cellule électrique CELL$_{\_i}$ vaut 4 V, la tension électrique U$_{CELL\_i+1}$ aux bornes de la deuxième cellule électrique CELL$_{\_i+1}$ vaut 4 V, et la tension électrique U$_{CELL\_i+2}$ aux bornes de la troisième cellule électrique CELL$_{\_i+2}$ vaut 4,1 V, alors la première tension électrique V$_1$ vaut 6,05 V et V$_2$ vaut 6 V. En ce cas, le comparateur COMP informe le module de commande COMM que la première tension électrique V$_1$ est supérieure à la deuxième tension électrique V$_2$, et celui-ci commande l'activation du premier circuit de dérivation DERIV1 permettant à la troisième cellule électrique CELL$_{\_i+2}$ de se décharger un peu.

Dans un cas inverse, pour lequel la tension électrique U$_{CELL\_i}$ aux bornes de la première cellule électrique CELL$_{\_i}$ vaut 4,1 V, la tension électrique U$_{CELL\_i+1}$ aux bornes de la deuxième cellule électrique CELL$_{\_i+1}$ vaut 4 V, et la tension électrique U$_{CELL\_i+2}$ aux bornes de la troisième cellule électrique CELL$_{\_i+2}$ vaut 4 V, alors la première tension électrique V$_1$ vaut 6,05 V et V$_2$ vaut 6,1 V. En ce cas, le comparateur COMP informe le module de commande COMM que la deuxième tension électrique V$_2$ est supérieure à la première tension électrique V$_1$, et celui-ci commande l'activation du deuxième circuit de dérivation DERIV2 permettant à la première cellule électrique CELL$_{\_i}$ de se décharger un peu.

Lorsque la première tension électrique V$_1$ et la deuxième tension électrique V$_2$ sont égales, le comparateur en informe le module de commande COMM qui n'active aucun des deux circuits de dérivation DERIV1 et DERIV2.

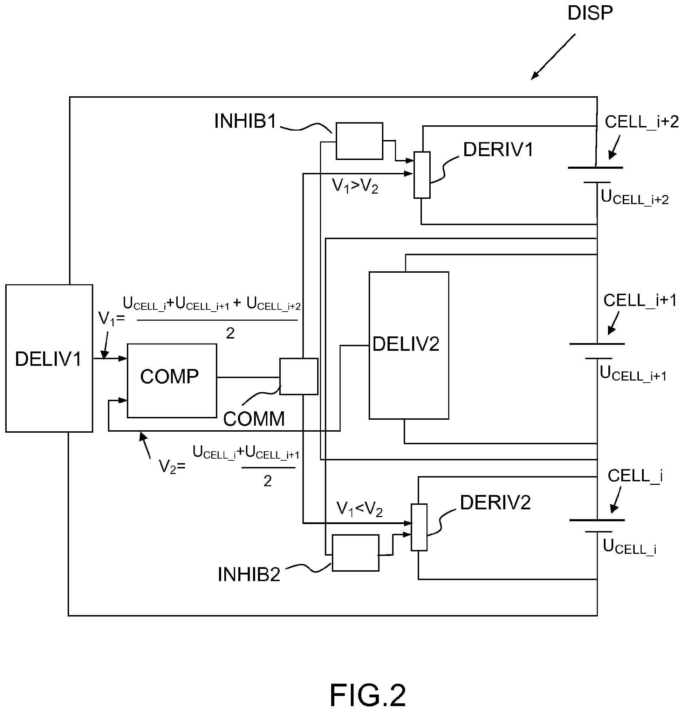

Sur la figure 2 est représenté une variante comprend un premier circuit d'inhibition INHIB1 capable d'empêcher l'activation du premier circuit de dérivation DERIV1 lorsque la tension électrique U$_{CELL\_i}$ aux bornes de la première cellule CELL$_{\_i}$ est inférieure à une tension de seuil U$_{seuil}$, et un deuxième circuit d'inhibition INHIB2 capable d'empêcher l'activation du deuxième circuit de dérivation DERIV2 lorsque la tension électrique U$_{CELL\_i+2}$ aux bornes de la troisième cellule CELL$_{\_i+2}$ est inférieure à la tension de seuil U$_{seuil}$.

Ces deux circuits d'inhibition INHIB1 et INHIB2 des circuits de dérivation DERIV1 et DERIV2 permettent d'éviter de décharger une cellule disposée en extrémité du groupe de trois cellules si la cellule disposée à l'autre extrémité du groupe de trois cellules est en sous-tension, ou, en d'autres termes la tension électrique à ses bornes est inférieure à la tension de seuil $U_{seuil}$. Ainsi une panne d'une cellule disposée en extrémité du groupe de trois cellules ne se propage pas à la cellule disposée à l'autre extrémité du groupe de trois cellules, car le circuit d'inhibition adéquat empêche en ce cas l'activation du circuit de dérivation de la cellule disposée à l'autre extrémité du groupe de trois cellules.

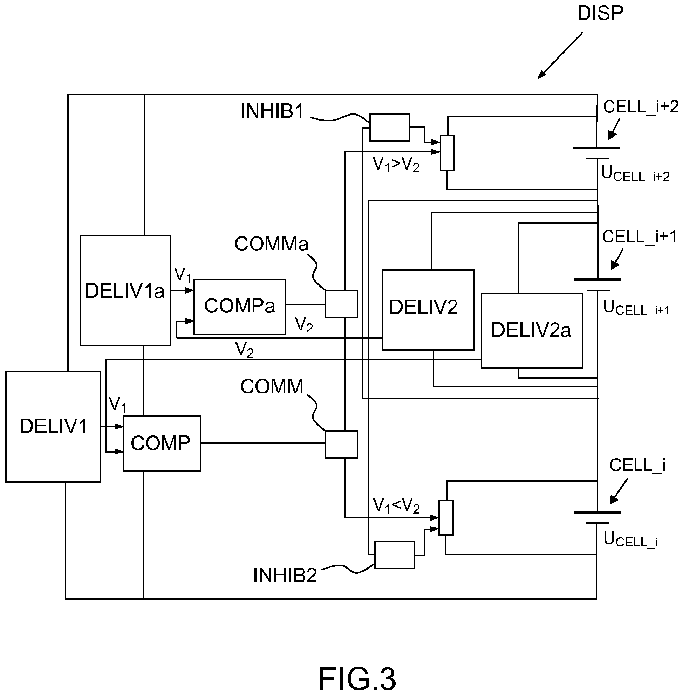

Sur la figure 3 est illustré un exemple de réalisation d'un dispositif d'équilibrage selon un aspect de l'invention, dans lequel des éléments importants sont montés en redondance afin de garantir un bon fonctionnement du dispositif DISP même en cas de panne d'un de ces éléments monté en redondance. Sur l'exemple de réalisation de la figure 3, sont montés également un premier module de délivrance en redondance DELIV1a de la première tension électrique $V_1$, un deuxième module de délivrance en redondance DELIV2a de la deuxième tension électrique $V_2$, un comparateur en redondance COMPa, et un module de commande COMMa en redondance. Bien entendu toute réalisation avec seulement un sous-ensemble des ces éléments en redondance est également possible. Ainsi, par exemple, en cas de panne d'un des deux comparateur COMP ou COMPa, ou de panne d'un des premiers modules de délivrance DELIV1 ou DEUV1a, ou de panne d'un des deux deuxièmes modules de délivrance DELIV2 ou DELIV2a, ou de panne d'un des deux modules de commande COMM ou COMMa, le dispositif d'équilibrage, qui sinon aurait pu activer en permanence un des circuits de dérivation DERV1 ou DERIV2 et décharger une cellule électrique du groupe de trois cellules, va inhiber le circuit de dérivation lorsque les comparateurs et moyens de commandes associés ne fournissent pas la même décision d'activation ou de désactivation du circuit de dérivation concerné.

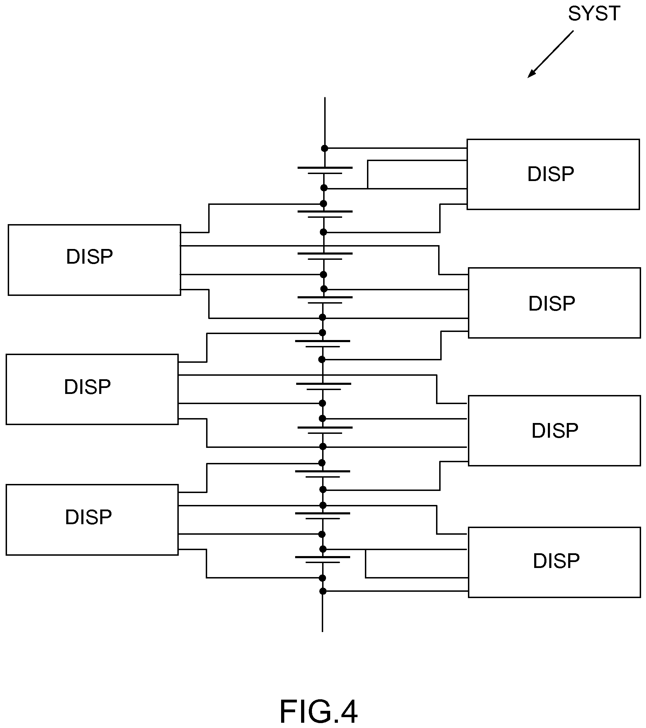

La figure 4 représente schématiquement un système SYST autonome d'équilibrage des tensions électriques des cellules électriques d'une batterie électrique. Toute série de trois cellules électriques consécutives de la batterie électrique comprend un dispositif d'équilibrage DISP selon l'invention, ainsi que les deux premières cellules et les deux dernières cellules. En effet, un dispositif tel que décrit précédemment est également adapté pour fonctionner avec deux cellules électriques, car le comparateur COMP ne tient en fait pas compte de la tension électrique aux bornes de la cellule médiane d'un groupe de trois cellules. Aussi il peut, sans aucune modification de réalisation, fonctionner avec deux cellules, comme s'il avait, entre les deux cellules électriques, une cellule de tension électrique nulle aux bornes. Un tel entrelacement de dispositif DISP selon l'invention, avec les cellules électriques de la batterie, permet de propager l'équilibrage des tensions électriques aux bornes des cellules, de proche en proche, à l'ensemble de la batterie.

Cet entrelacement permet de maintenir un équilibrage total des tensions aux bornes des cellules de la batterie même en cas de panne d'une cellule, par exemple en court-circuit, ou même d'un des dispositifs DISP lorsque celui-ci comprend des éléments en redondance.

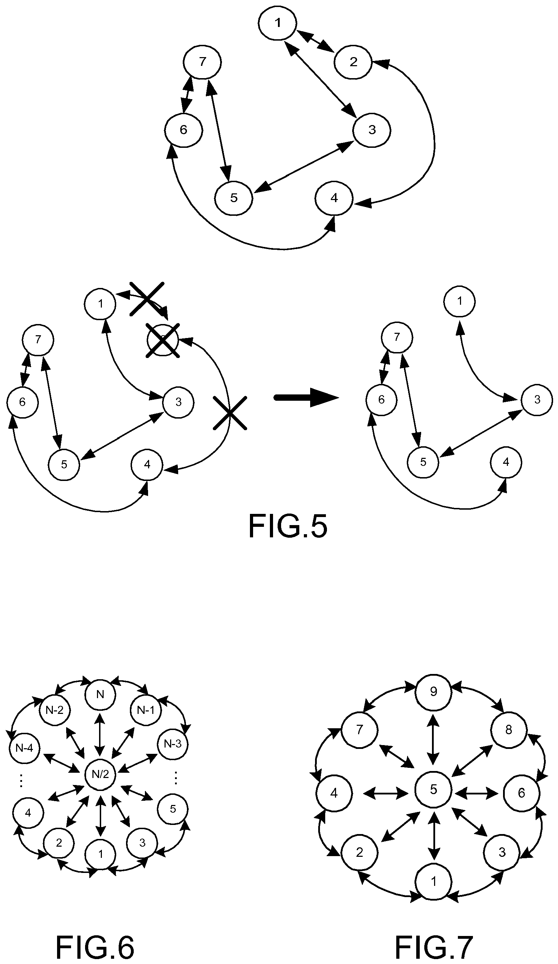

Sur la figure 5, on a représenté un exemple de système selon la figure 4, avec 7 cellules électriques en série, mais cela peut être extrapolé à un nombre quelconque de cellules électriques montées électriquement en série. Les références numériques entourées d'un cercle représentent les cellules, et les flèches représentent les dispositifs d'équilibrage avec l'entrelacement décrit précédemment. Aussi on a un dispositif d'équilibrage pour chaque groupe consécutif de trois cellules (équilibrage de la cellule 1 et la cellule 3, la cellule 2 et la cellule 4, la cellule 3 et la cellule 3 et la cellule 5, la cellule 4 et la cellule 6, et les couples de cellules extrêmales 1 et 2, et 6 et 7.

Sur cet exemple de fonctionnement, on suppose un court-circuit de la cellule 2. En ce cas, par l'entrelacement des dispositifs d'équilibrage DISP, le reste des cellules électriques restent équilibrées.

Sur les figures 6 et 7 sont illustrées des exemples de réalisation plus complexes, pour un nombre N quelconque de cellules disposées en série, et pour 9 cellules disposées en série, permettant de conserver un équilibrage de la batterie électrique même en cas de panne double. Le mode de représentation est le même que celui utilisé pour la figure 5. Dans un tel cas, pour une batterie comprenant N cellules électriques reliées en série, il faut 2N-2 dispositifs d'équilibrage DISP.

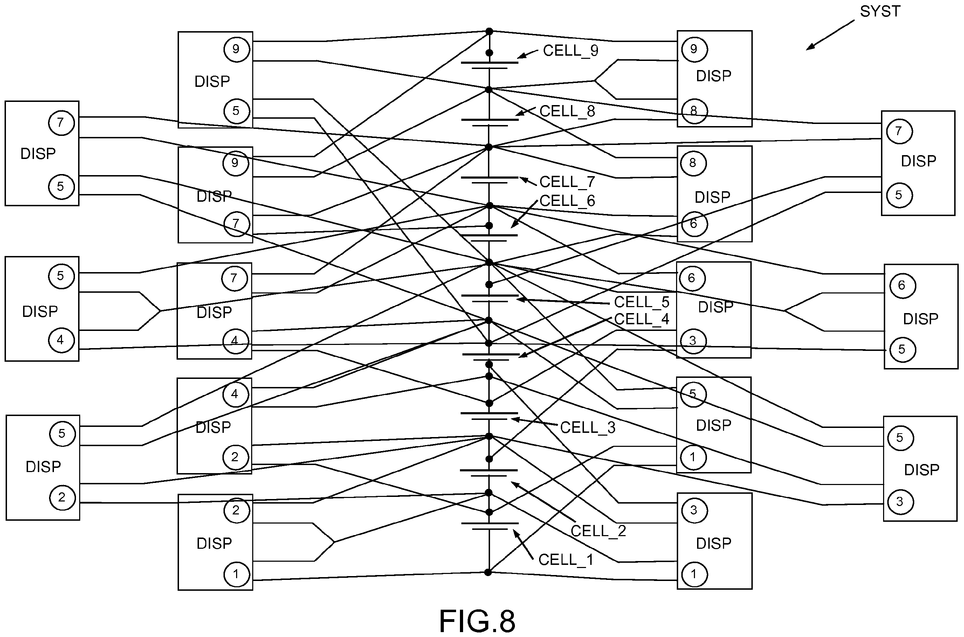

La figure 8 représente le mode de réalisation de la figure 7, selon le même mode de représentation que celui de la figure 4, avec un entrelacement plus complexe, mais résistant à une double panne.

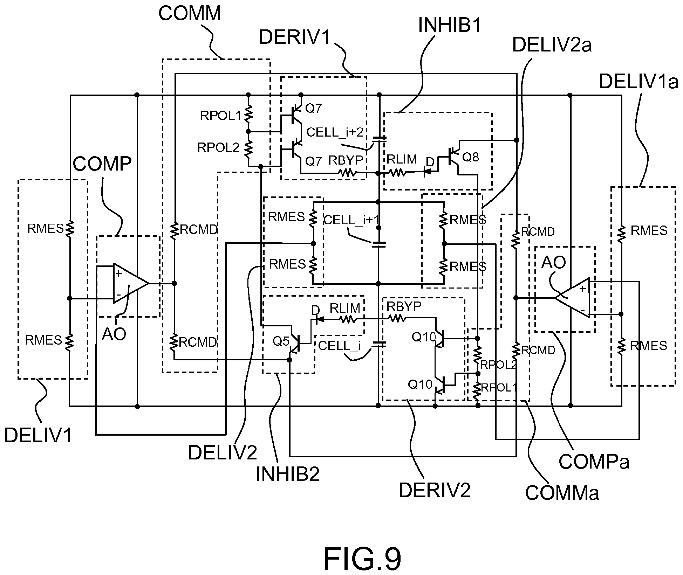

Sur la figure 9 est illustré un exemple de réalisation d'un dispositif DISP selon la figure 3, avec des éléments montés en redondance pour limiter sensiblement les risques de panne.

Une première cellule électrique $CELL_i$, une deuxième cellule électrique $CELL_{i+1}$, et une troisième cellule électrique $CELL_{i+2}$ sont disposées et reliées électriquement en série. Les comparateurs COMP et COMPa comprennent chacun un amplificateur opérationnel AO. Les premiers modules de délivrance DELIV1 et DELIV1a de la première tension électrique $V_1$ comprennent chacun deux résistances RMES montées en série, les premiers modules de délivrance DELIV1 et DELIV1a étant montés en parallèle aux bornes du groupe de trois cellules électriques $CELL_i$, $CELL_{i+1}$, et $CELL_{i+2}$. Les deuxcièmes modules de délivrance DELIV2 et DELIV2a de la deuxième tension électrique $V_2$ comprennent chacun deux résistances RMES montées en série, les deuxièmes modules de délivrance DELIV2 et DELIV2a étant montés en parallèle aux bornes de la cellule médiane $CELL_{i+1}$ du groupe de trois cellules électriques $CELL_i$, $CELL_{+1}$, et $Celle_{i+2}$.

Le premier circuit de dérivation DERIV1 comprend une résistance RBYP, et deux interrupteurs Q7 montés en série, le premier circuit de dérivation DERIV1 étant connecté en parallèle aux bornes de la troisième cellule CELL$_{-i+2}$. De manière analogue, le deuxième circuit de dérivation DERIV2 comprend une résistance RBYP, et deux interrupteurs Q10 montés en série, le deuxième circuit de dérivation DERIV2 étant connecté en parallèle aux bornes de la première cellule CELL$_{-i}$,

Les modules de commande COMM et COMMa comprennent chacun deux résistances de commande RCMD et deux résistances de polarisation RPOL. En outre, le premier circuit d'inhibition INHIB1 comprend un interrupteur Q8, une diode D et une résistance RLIM montés en série, et le deuxième circuit d'inhibition INHIB2 comprend un interrupteur Q5, une diode D et une résistance RLIM montés en série. Les différents éléments du dispositif DISP sont reliés comme illustré sur la figure 9.

La présente invention permet, de manière simple et à coût réduit, d'équilibrer les tensions électriques aux bornes des cellules électriques d'une batterie électrique, de manière autonome, sans besoin d'une unité de commande électronique externe. Un unique dispositif d'équilibrage de trois cellules électriques disposés en série, fonctionnant également pour deux cellules électriques disposés en série, est utilisé, ce qui permet de diminuer le coût de réalisation. En outre des montages particuliers permettent de résister à des pannes simples ou multiples, ce qui est particulièrement important lorsqu'il s'agit de batteries électriques embarqués à bord d'engins spatiaux tel des satellites.

**Revendications**

1. Dispositif d'équilibrage (DISP) des tensions électriques aux bornes des cellules électriques d'un groupe de trois cellules électriques (CELL$_{-i}$, CELL$_{i+1}$, CELL$_{i+2}$) disposées en série, comprenant des premiers moyens de délivrance (DELIV1) d'une première tension électrique (V1) égale à la demie-somme des tensions électriques aux bornes dudit groupe de trois cellules, des deuxièmes moyens de délivrance (DELIV2) d'une deuxième tension électrique (V2) égale à la somme de la tension électrique aux bornes d'une cellule disposée à une extrémité dudit groupe de trois cellules et de la moitié de la tension électrique aux bornes de la cellule disposée au milieu dudit groupe de trois cellules, un comparateur (COMP) pour comparer ladite première tension (V$_1$) et ladite deuxième tension (V$_2$) comprenant un amplificateur (AO) de tension électrique, des premiers moyens commandés de dérivation (DERIV1) pour dériver du courant électrique d'une borne d'une cellule disposée à une extrémité dudit groupe de trois cellules vers l'autre borne de ladite cellule de manière à décharger ladite cellule, des deuxièmes moyens commandés de dérivation (DERIV2) pour dériver du courant électrique d'une borne de la cellule disposée à l'autre extrémité dudit groupe de trois cellules vers l'autre borne de ladite cellule de manière à décharger ladite cellule, et des moyens de commande (COMM) adaptés à commander lesdits premiers moyens de dérivation (DERIV1) et lesdits deuxièmes moyens de dérivation (DERIV2) selon l'information reçue du comparateur (COMP).

2. Dispositif selon le revendication 1, dans lequel lesdits premiers et deuxièmes moyens commandés de dérivation (DERIV1, DERIV2) comprennent respectivement un transistor (Q7, Q10), et éventuellement une résistance (RBYP).

3. Dispositif selon la revendication 1 ou 2, comprenant lesdits moyens de commande (COMM) desdits premiers moyens de dérivation (DERIV1) et desdits deuxièmes moyens de dérivation (DERIV2) adaptés pour activer/désactiver lesdits premiers et deuxièmes moyens de dérivation.

4. Dispositif selon les revendications 2 et 3, dans lequel lesdits moyens de commande (COMM) comprennent respectivement une résistance de polarisation (RPOL).

5. Dispositif selon l'une des revendications précédentes, comprenant des premiers et deuxièmes moyens d'inhibition (INHIB1, INHIB2) adaptés pour empêcher respectivement l'activation des premiers et deuxièmes moyens de dérivation (DERIV1, DERIV2) lorsque la cellule opposée à la cellule d'extrémité dudit groupe de trois cellules liée au moyen de dérivation est inférieure à une tension de seuil.

6. Dispositif selon la revendication 5, dans lequel lesdits premiers et deuxièmes moyens d'inhibition (INHIB1, INHIB2) comprennent respectivement un transistor (Q8, Q5), une diode (D) et une résistance (RLIM).

7. Dispositif selon l'une des revendications précédentes, dans lequel lesdits premiers moyens de délivrance (DELIV1) de la première tension électrique (V1) comprennent deux résistances (RMES) égales disposées en série sur une dérivation entre les extrémités dudit groupe de trois cellules, et une sortie délivrant ladite première tension électrique, disposé entre lesdites deux résistances.

8. Dispositif selon l'une des revendications précédentes, dans lequel lesdits deuxièmes moyens de délivrance (DELIV2) de la deuxième tension (V2) électrique comprennent deux résistances (RMES) égales disposées en série sur une dérivation entre les bornes de la cellule disposée au milieu dudit groupe de trois cellules, et une sortie délivrant ladite deuxième tension électrique, disposé entre lesdites deux résistances.

9. Dispositif selon l'une des revendications 1 à 8, dans lequel ledit comparateur (COMP) comprend un comparateur en redondance (COMPa), et/ou lesdits premiers moyens de délivrance (DELIV1) de ladite première tension électrique comprennent des premiers moyens de délivrance en redondance (DELIV1a) de ladite première tension électrique, et/ou lesdits deuxièmes moyens de délivrance (DELIV2) de ladite deuxième tension électrique comprennent des deuxièmes moyens de délivrance en redondance (DELIV2a) de ladite deuxième tension électrique, et/ou lesdits moyens de commande (COMM) comprennent des moyens de commande en redondance (COMMa).

10. Système autonome d'équilibrage (SYST) des tensions électriques des cellules électriques d'une batterie électrique comprenant des cellules électriques disposées en série, **caractérisé en ce qu'**il comprend au moins un groupe de trois cellules disposées en série muni d'un dispositif d'équilibrage (DISP) selon l'une des revendications précédentes.

11. Système autonome d'équilibrage (SYST) selon la revendication 10, dans lequel tout groupe de trois cellules électriques consécutives est muni d'un dispositif d'équilibrage (DISP) selon l'une des revendications 1 à 9.

12. Système autonome d'équilibrage (SYST) selon la revendication 10, dans lequel deux cellules consécutives disposées en extrémité de ladite série de cellules de la batterie sont munies d'un dispositif d'équilibrage (DISP) selon l'une des revendications 1 à 9, ledit dispositif d'équilibrage étant adapté pour fonctionner avec deux cellules consécutives en considérant une cellule virtuelle dont la tension électrique aux bornes est nulle.

13. Procédé d'équilibrage des tensions électriques aux bornes des cellules électriques d'un groupe de trois cellules électriques disposées en série, dans lequel le dispositif d'équilibrage des tensions électriques tel qu'il est défini par les revendications 1 à 9 délivre une première tension électrique égale à la demie-somme des tensions électriques aux bornes dudit groupe de trois cellules, et on délivre une deuxième tension électrique égale à la somme de la tension électrique aux bornes d'une cellule disposée à une extrémité dudit groupe de trois cellules et de la moitié de la tension électrique aux bornes de la cellule disposée au milieu dudit groupe de trois cellules, compare ladite première tension (V1) et ladite deuxième tension (V2) par le comparateur (COMP), dérive du courant électrique d'une borne d'une cellule disposée à une extrémité dudit groupe de trois cellules vers l'autre borne de ladite cellule de manière à décharger ladite cellule par lesdits premiers moyens de dérivation (DERIV1), dérive du courant électrique d'une borne de la cellule disposée à l'autre extrémité dudit groupe de trois cellules vers l'autre borne de ladite cellule de manière à décharger ladite cellule par lesdits deuxièmes moyens de dérivation (DERIV2), et commande lesdits premiers et deuxièmes moyens de dérivation (DERIV1, DERIV2) par desdits moyens de commande (COMM) selon l'information reçue du comparateur (COMP).

14. Utilisation d'un système autonome d'équilibrage (SYST) selon l'une des revendications 10 à 12, à bord d'un système spatial.

**Patentansprüche**

1. Vorrichtung zum Ausgleich (DISP) elektrischer Spannungen an den Klemmen von elektrischen Zellen einer Gruppe von drei in Serie geschalteten elektrischen Zellen ($CELL_{-i}$, $CELL_{-i+1}$, $CELL_{-i+2}$), beinhaltend erste Mittel zum Abgeben (DELIV1) einer ersten elektrischen Spannung ($V_1$), welche der halben Summe der elektrischen Spannungen an den Klemmen der Gruppe von drei Zellen entspricht, zweite Mittel zur Abgabe (DELIV2) einer zweiten elektrischen Spannung ($V_2$), welche der Summe der elektrischen Spannung an den Klemmen einer an einem Ende der Gruppe von drei Zellen angeordneten Zelle und der Hälfte der elektrischen Spannung an den Klemmen der in der Mitte der Gruppe von drei Zellen angeordneten Zelle entspricht, einen Komparator (COMP) zum Vergleichen der ersten Spannung ($V_1$) und der zweiten Spannung ($V_2$), beinhaltend einen Verstärker (AO) von elektrischer Spannung, erste gesteuerte Ableitungsmittel (DERIV1) zum Ableiten von elektrischem Strom von einer Klemme einer an einem Ende der Gruppe von drei Zellen angeordneten Zelle zur anderen Klemme der Zelle, so dass die Zelle entladen wird, zweite gesteuerte Ableitungsmittel (DERIV2) zum Ableiten von elektrischem Strom von einer Klemme der am anderen Ende der Gruppe von drei Zellen angeordneten Zelle zur anderen Klemme der Zelle, so dass die Zelle entladen wird, und Steuerungsmittel (COMM), die geeignet sind, die ersten Ableitungsmittel (DERIV1) und die zweiten Ableitungsmittel (DERIV2) entsprechend der vom Komparator (COMP) erhaltenen Information zu steuern.

2. Vorrichtung nach Anspruch 1, bei welcher die ersten und zweiten gesteuerten Ableitungsmittel (DERIV1, DERIV2) jeweils einen Transistor (Q7, Q10) und eventuell einen Widerstand (RBYP) beinhalten.

**3.** Vorrichtung nach Anspruch 1 oder 2, beinhaltend die Steuerungsmittel (COMM) der ersten Ableitungsmittel (DERIV1) und der zweiten Ableitungsmittel (DERIV2), welche geeignet sind, um die ersten und die zweiten Ableitungsmittel zu aktivieren/deaktivieren.

**4.** Vorrichtung nach den Ansprüchen 2 und 3, bei welcher die Steuerungsmittel (COMM) jeweils einen Polarisierungswiderstand (RPOL) beinhalten.

**5.** Vorrichtung nach einem der vorhergehenden Ansprüche, beinhaltend erste und zweite Hemm-Mittel (INHIB1, INHIB2), geeignet, um jeweils die Aktivierung der ersten und der zweiten Ableitungsmittel (DERIV1, DERIV2) zu verhindern, wenn die Zelle gegenüber der Zelle am Ende der Gruppe von drei Zellen, welche mit dem Ableitungsmittel verbunden ist, eine Schwellenspannung unterschreitet.

**6.** Vorrichtung nach Anspruch 5, bei welcher die ersten und zweiten Hemm-Mittel (INHIB1, INHIB2) jeweils einen Transistor (Q8, Q5), eine Diode (D) und einen Widerstand (RLIM) beinhalten.

**7.** Vorrichtung nach einem der vorhergehenden Ansprüche, bei welcher die ersten Mittel zur Abgabe (DELIV1) der ersten elektrischen Spannung (V1) zwei gleiche Widerstände (RMES) beinhalten, welche in Serie an einer Ableitung zwischen den Enden der Gruppe von drei Zellen angeordnet sind, und einen Ausgang, welcher die erste elektrische Spannung abgibt, welcher zwischen den beiden Widerständen angeordnet ist.

**8.** Vorrichtung nach einem der vorhergehenden Ansprüche, bei welcher die zweiten Mittel zur Abgabe (DELIV2) der zweiten elektrischen Spannung (V2) zwei gleiche Widerstände (RMES) beinhalten, welche in Serie an einer Ableitung zwischen den Klemmen der in der Mitte der Gruppe von drei Zellen angeordneten Zelle angeordnet sind, und einen Ausgang, welcher die zweite elektrische Spannung abgibt, welcher zwischen den beiden Widerständen angeordnet ist.

**9.** Vorrichtung nach einem der Ansprüche 1 bis 8, bei welcher der Komparator (COMP) einen redundanten Komparator (COMPa) beinhaltet, und/oder die ersten Mittel zur Abgabe (DELIV1) der ersten elektrischen Spannung erste redundante Mittel zur Abgabe (DELIV1a) der ersten elektrischen Spannung beinhalten, und/oder die zweiten Mittel zur Abgabe (DELIV2) der zweiten elektrischen Spannung zweite redundante Mittel zur Abgabe (DELIV2a) der zweiten elektrischen Spannung beinhalten, und/oder die Steuerungsmittel (COMM) redundante Mittel zur Steuerung (COMMa) beinhalten.

**10.** Autonomes Ausgleichssystem (SYST) von elektrischen Spannungen der elektrischen Zellen einer elektrischen Batterie, beinhaltend in Serie geschaltete elektrische Zellen, **dadurch gekennzeichnet, dass** es mindestens eine Gruppe von drei in Serie geschalteten Zellen beinhaltet, versehen mit einer Ausgleichsvorrichtung (DISP) nach einem der vorhergehenden Ansprüche.

**11.** Autonomes Ausgleichssystem (SYST) nach Anspruch 10, bei welchem jede Gruppe von drei aufeinander folgenden elektrischen Zellen mit einer Ausgleichsvorrichtung (DISP) nach einem der Ansprüche 1 bis 9 versehen ist.

**12.** Autonomes Ausgleichssystem (SYST) nach Anspruch 10, bei welchem zwei aufeinander folgende, am Ende der Serie von Zellen der Batterie angeordnete Zellen, mit einer Ausgleichsvorrichtung (DISP) nach einem der Ansprüche 1 bis 9 versehen sind, wobei die Ausgleichsvorrichtung geeignet ist, um mit zwei aufeinander folgenden Zellen zu arbeiten, wobei es eine virtuelle Zelle berücksichtigt, deren elektrische Spannung an den Klemmen null ist.

**13.** Ausgleichsverfahren der elektrischen Spannungen an den Klemmen der elektrischen Zellen einer Gruppe von drei in Serie geschalteten elektrischen Zellen, bei welchem die Vorrichtung zum Ausgleich der elektrischen Spannungen wie in den Ansprüchen 1 bis 9 definiert eine erste elektrische Spannung abgibt, welche der halben Summe der elektrischen Spannungen an den Klemmen der Gruppe von drei Zellen entspricht, und man eine zweite elektrische Spannung abgibt, welche der Summe der elektrischen Spannung an den Klemmen einer an einem Ende der Gruppe von drei Zellen angeordneten Zelle und der Hälfte der elektrischen Spannung an den Klemmen der in der Mitte der Gruppe von drei Zellen angeordneten Zelle entspricht, die erste Spannung (V1) und die zweite Spannung (V2) durch den Komparator (COMP) vergleicht, elektrischen Strom von einer Klemme einer an einem Ende der Gruppe von drei Zellen angeordneten Zelle an die andere Klemme der Zelle ableitet, so dass die Zelle durch die ersten Ableitungsmittel (DERIV1) entladen wird, elektrischen Strom von einer Klemme der am anderen Ende der Gruppe von drei Zellen angeordneten Zelle zu der anderen Klemme der Zelle ableitet, so dass die Zelle durch die zweiten Ableitungsmittel (DERIV2) entladen wird, und die ersten und die zweiten Ableitungsmittel (DERIV1, DERIV2) durch Steuerungsmittel (COMM) entsprechend der vom Komparator (COMP) erhaltenen Information steuert.

**14.** Einsatz eines autonomen Ausgleichssystems (SYST) nach einem der Ansprüche 10 bis 12 an Bord eines Raumsystems.

## Claims

1. A device (DISP) for balancing electric voltages at the terminals of the electric cells of a group of three electric cells (CELL$_{-i}$, CELL$_{i+1}$, CELL$_{i+2}$) disposed in series, comprising first means (DELIV1) for delivering a first electric voltage (V1) equal to the half-sum of the electric voltages at the terminals of said group of three cells, second means (DELIV2) for delivering a second electric voltage (V2) equal to the sum of the electric voltage at the terminals of a cell disposed at one end of said group of three cells and to half the electric voltage at the terminals of the cell disposed in the middle of said group of three cells, a comparator (COMP) for comparing said first voltage (V$_1$) and said second voltage (V$_2$) comprising an electric voltage amplifier (AO), first controlled branching means (DERIV1) for branching the electric current of a terminal of a cell disposed at one end of said group of three cells towards the other terminal of said cell so as to discharge said cell, second controlled branching means (DERIV2) for branching the electric current of a terminal of the cell disposed at the other end of said group of three cells towards the other terminal of said cell so as to discharge said cell and control means (COMM) adapted to control said first branching means (DERIV1) and said second branching means (DERIV2) according to the information received from the comparator (COMP).

2. The device according to claim 1, wherein said first and second controlled branching means (DERIV1, DERIV2) respectively comprise a transistor (Q7, Q10) and possibly a resistor (RBYP).

3. The device according to claim 1 or 2, comprising said means (COMM) for controlling said first branching means (DERIV1) and said second branching means (DERIV2) adapted to activate/deactivate said first and second branching means.

4. The device according to claims 2 and 3, wherein said control means (COMM) respectively comprise a bias resistor (RPOL).

5. The device according to any of the preceding claims, comprising first and second inhibition means (INHIB1, INHIB2) adapted to respectively prevent the activation of the first and second branching means (DERIV1, DERIV2) when the cell opposite the end cell of said group of three cells connected to the branching means is below a threshold voltage.

6. The device according to claim 5, wherein said first and second inhibition means (INHIB1, INHIB2) respectively comprise a transistor (Q8, Q5), a diode (D) and a resistor (RLIM).

7. The device according to any of the preceding claims, wherein said first means (DELIV1) for delivering the first electric voltage (V1) comprise two equal resistors (RMES) disposed in series on a branch between the ends of said group of three cells and an output delivering said first electric voltage disposed between said two resistors.

8. The device according to any of the preceding claims, wherein said second means (DELIV2) for delivering the second electric voltage (V2) comprise two equal resistors (RMES) disposed in series on a branch between the terminals of the cell disposed in the middle of said group of three cells and an output delivering said second electric voltage disposed between said two resistors.

9. The device according to any of claims 1 to 8, wherein said comparator (COMP) comprises a redundant comparator (COMPa) and/or said first means (DELIV1) for delivering said first electric voltage comprise first redundant means (DELIV1a) for delivering said first electric voltage and/or said second means (DELIV2) for delivering said second electric voltage comprise second redundant means (DELIV2a) for delivering said second electric voltage and/or said control means (COMM) comprise redundant control means (COMMa).

10. An autonomous system (SYST) for balancing electric voltages of the electric cells of an electric battery comprising electric cells disposed in series, **characterised in that** it comprises at least one group of three cells disposed in series provided with a balancing device (DISP) as claimed in any one of the preceding claims.

11. The autonomous balancing system (SYST) according to claim 10, wherein any group of three consecutive electric cells is provided with a balancing device (DISP) as claimed in any one of claims 1 to 9.

12. The autonomous balancing system (SYST) according to claim 10, wherein two consecutive cells disposed at an end of said series of cells of the battery are provided with a balancing device (DISP) as claimed in any one of claims 1 to 9, said balancing device being adapted to operate with two consecutive cells by considering a virtual cell with zero electric voltage at the terminals.

13. A method for balancing electric voltages at the terminals of the electric cells of a group of three electric cells disposed in series, wherein the device for balancing electric voltages as disclosed in claims 1 to 9 delivers a first electric voltage equal to the half-sum of the electric voltages at the terminals of said group of three cells and delivers a second electric voltage equal to the sum of the electric voltage at the terminals of a cell disposed at one end of said group of three cells and to half the electric voltage at the terminals of the cell disposed in the middle of said group of three cells, compares, by means of the comparator (COMP), said first voltage (V1) and said second voltage (V2), branches, by means of said first branching means (DERIV1), the electric current of a terminal of a cell disposed at one end of said group of three cells towards the other terminal of said cell so as to discharge said cell, branches, by means of said second branching means (DERIV2), the electric current of a terminal of the cell disposed at the other end of said group of three cells towards the other terminal of said cell so as to discharge said cell and controls, by means of said control means (COMM), said first and second branching means (DERIV1, DERIV2) according to the information received from the comparator (COMP).

14. The use of an autonomous balancing system (SYST) according to any of claims 10 to 12 on board a space system.

FIG.1

FIG.2

FIG.3

FIG.4

FIG.5

FIG.6

FIG.7

FIG.8

FIG.9